# EUROPÄISCHE PATENTSCHRIFT

(11) **EP 2 994 616 B1**
(45) Veröffentlichungstag und Bekanntmachung des Hinweises auf die Patenterteilung: **13.06.2018**
(21) Anmeldenummer: 14752589.3
(22) Anmeldetag: 06.08.2014
(51) Int. Cl.: F01D 11/12

(54) **ANSTREIFDICHTUNG UND DICHTUNGSANORDNUNG**
ABRADABLE SEAL AND SEALING ARRANGEMENT
GARNITURE ABRADABLE ET DISPOSITIF D'ÉTANCHÉITÉ

(30) Priorität: 30.09.2013 DE 102013219766
(43) Veröffentlichungstag der Anmeldung: 16.03.2016
(73) Patentinhaber: Siemens Aktiengesellschaft, 80333 München (DE)
(72) Erfinder: GRUND, Christoph, 02827 Görlitz (DE); LEIDINGER, Bernd, 01159 Dresden (DE)
(86) Internationale Anmeldenummer: PCT/EP2014/066893
(87) Internationale Veröffentlichungsnummer: WO 2015/043811

(56) Entgegenhaltungen:
- EP-A1- 2 636 850
- US-A- 6 109 843
- US-A1- 2011 002 771

## Beschreibung

Die Erfindung betrifft eine Dichtungsanordnung nach dem Oberbegriff des unabhängigen Patentanspruchs 1.

Um den Wirkungsgrad bei Strömungsmaschinen zu erhöhen muss der Radialspalt zwischen rotierenden und feststehenden Bauteilen möglichst gering gehalten werden, um so Strömungsverluste innerhalb der Strömungsmaschine zu minimieren. Zur Abdichtung des Radialspaltes kommen häufig sogenannte Anstreifdichtungen zum Einsatz. Die Anstreifdichtungen weisen an Ihrer Innenseite eine abtragbare Einlaufschicht auf. Die Einlaufschicht ermöglicht ein Anstreifen und Einlaufen, des Rotor bzw. der Spitzen der Turbinenschaufeln am Dichtband der Anstreifdichtung, ohne das es dabei zu Schäden am rotierenden Bauteil kommt.

Die als klassische Einlaufschichten seit langem bekannte Honeycombdichtung weist eine wabenförmigen Struktur auf, die beim Anstreifen zum Teil nachgibt und zum Teil abgetragen werden kann, wodurch sich ein Minimalspiel zwischen dem rotierenden Bauteil und dem feststehenden Bauteil ergibt.

Neuartige Einlaufschichten sind aus porösem Material in Form von aufgeschäumten, metallischen Legierungen ausgebildet. Eine solche Anstreifdichtung ist beispielsweise in der EP 1 013 890 A2 offenbart.

Bei der Auswahl der Anstreifdichtung ist neben der Auswahl einer geeigneten Einlaufschicht vor allem auf den richtigen Innendurchmesser der Anstreifdichtung zu achten. Der Innendurchmesser ergibt sich dabei zum einen aus dem Durchmesser des rotierenden Bauteils und zum anderen aus der radialen Auslenkung des rotierenden Bauteils aus seiner axialen Mittellage. Ist der Innendurchmesser zu gering gewählt, kann es bei größeren radialen Auslenkungen während des Betriebs der Strömungsmaschine zu einen zu starken Anstreifen der Rotors oder der Schaufelspitzen der Turbomaschinen an der Anstreifdichtung kommen, was eine Zerstörung der Anstreifdichtung zur Folge hätte. Je größer die zu erwartenden radialen Auslenkungen sind, desto größer muss der Innendurchmesser und damit der Radialspalt zwischen rotierendem und feststehendem Bauteil gewählt werden. Neben Anstreifdichtungen mit Kreisförmigen Innendurchmesser sind auch Anstreifdichtungen mit einer von der Kreisform abweichenden Querschnittsform bekannt. Die US 6 109 843 A offenbart beispielsweise eine Anstreifdichtung mit einem ovalen Querschnitt.

Bei elektromagnetisch gelagerten Rotoren, treten Bauartbedingt sehr große radiale Auslenkungen auf. Im stromlosen Zustand, liegt der Rotor üblicherweise im sogenannten Fanglager, welche auch im Falle eines Abwurfs des Rotors den Rotor auffangen. Im bestromten Zustand wird der Rotor, durch das Magnetlager im Wesentlichen vertikal angehoben und in dieser Position gehalten. Die Vertikale Auslenkung muss bei der Auswahl des Innendurchmessers der Dichtung berücksichtigt werden. Auf Grund der großen Vertikalen Verschiebung ergeben sich große Innendurchmesser und dadurch bedingt große Radialspalte, welche zu hohen Wirkungsgradverlusten führen.

Ausgehend von dem zuvor beschriebenen Problem ist es Aufgabe der vorliegenden Erfindung, eine Dichtungsanordnung mit einer Anstreifdichtung bereitzustellen, die einen verbesserten Wirkungsgrad beim Einsatz in Strömungsmaschinen ermöglicht.

Die Aufgabe wird durch die Merkmale des unabhängigen Patentanspruchs 1 gelöst.

Weitere Ausgestaltungen der Erfindung, die einzeln oder in Kombination miteinander einsetzbar sind, sind Gegenstand der Unteransprüche.

Die erfindungsgemäße Dichtungsanordnung, umfassend wenigstens eine Anstreifdichtung zur Abdichtung eines Spaltes zwischen einem Rotor und einem Gehäuse, wobei die Anstreifdichtung eine Dichtschale mit einer ovale Öffnung zur Aufnahme des Rotors aufweist und wobei der Rotor von aktiv Magnetlagern gelagert wird und Fanglager vorgesehen sind, die im Störfall oder im Stillstand des Rotors, die Lagerung des Rotors übernehmen,zeichnet sich dadurch aus, dass die Anstreifdichtung derart angeordnet ist, dass Ihre Längsachse im Wesentlichen vertikal ausgerichtet ist.
Durch die ovale Öffnung der Dichtschale kann der Radialspalt zwischen einem Rotor und einem feststehenden Gehäuse insbesondere dann minimiert werden, wenn die Auslenkung des Rotors im wesentlichen in eine Richtung erfolgt, wie dies beispielsweise bei magnetgelagerten Rotoren der Fall ist. Die Anstreifdichtung kann dann so ausgerichtet werden, dass ihre Längserstreckung im Wesentlichen mit der Richtung der Hauptauslenkung des Rotors übereinstimmt. Hierdurch kann der Radialspalt quer zur Hauptauslenkung minimiert werden. Die ovale Ausbildung der Öffnung erlaubt somit eine große Auslenkung des Rotors in Längsrichtung und sorgt zugleich für einen geringen Radialspalt in Querrichtung.

Die Dichtschale der Anstreifdichtung ermöglicht dabei auf Grund Ihrer Einlaufschicht ein leichtes Anstreifen und Einlaufen des Rotors bzw. der Turbinenschaufel in der Dichtschale wodurch ein weiter verringerter Radialspalt erzielt wird.

Eine Ausgestaltung der Erfindung sieht vor, dass die Dichtschale geteilt ausgebildet ist. Die geteilte Ausbildung der Dichtschale ermöglicht eine einfachere Montage der Anstreifdichtung. I

Eine weitere vorteilhafte Ausgestaltung der Erfindung sieht vor, dass die Anstreifdichtung als Labyrinth-Anstreifdichtung ausgebildet ist. Die Labyrinth-Dichtung weist mehrere umlaufende, quer zur Strömungsrichtung und im Abstand zueinander angeordnete Dichtbänder auf, die eine verbesserte Dichtwirkung der Anstreifdichtung ermöglichen.

Durch die vertikale Ausrichtung der Längsachse der Anstreifdichtung wird gewährleistet, dass beim Anheben des Rotors bzw. beim Ablegen des Rotors in die Fanglager es zu keinem zu starken Kontakt des Rotors bzw. der Schaufelspitzen mit der Dichtschale der Anstreifdichtung kommt, was eine Beschädigung der Dichtschale zur Folge hätte. Gleichzeitig wird durch die ovale Form der Dichtschale ein sehr enger Dichtspalt in Querrichtung erzielt, wodurch sich eine optimale Abdichtung des Dichtspaltes und damit eine Erhöhung des Wirkungsgrades der Anstreifdichtung ergeben.

Durch die ovale Ausbildung der Dichtschale wird somit eine Verbesserung des Wirkungsgrades der Dichtungsanordnung insbesondere bei Rotoren erzielt, die eine starke Auslenkung in einer Hauptrichtung aufweisen, wie dies beispielsweise bei magnetgelagerten Rotoren der Fall ist.

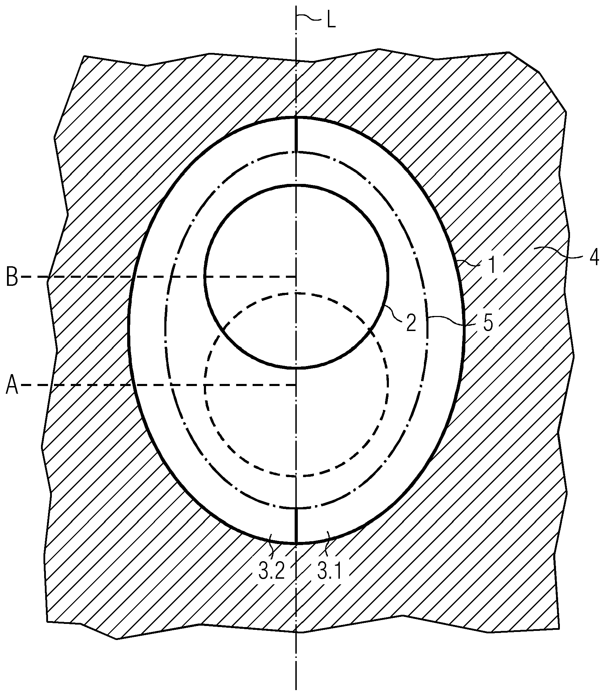

Ein Ausführungsbeispiel der Erfindung wird nachfolgend anhand der Figur 1 erläutert.
Figur 1 zeigt eine erfindungsgemäße Dichtungsanordnung mit der erfindungsgemäßen Anstreifdichtung im Radialschnitt. Die Figur zeigt dabei nur eine schematische, stark vereinfachte Darstellung der Dichtungsanordnung, bei der nur die für die Erfindung wesentlichen Bauteile dargestellt sind.

Figur 1 zeigt eine Dichtungsanordnung, wobei die Dichtungsanordnung wenigstens eine Anstreifdichtung 1 umfasst, welche in einem Gehäuse 4 angeordnet ist. Die Anstreifdichtung 1 dient zur Abdichtung eines Radialspaltes zwischen dem Rotor 2 und dem Gehäuse 4. Die Dichtschale 3 ist in vertikaler Richtung geteilt ausgebildet (3.1; 3.2). Die Innenseite der Dichtschale 3 weist einen Einlaufbelag 5 auf, an dem der Rotor anstreifen bzw. einlaufen kann. Der Rotor 2 wird von nicht dargestellten Aktivmagnetlagern gelagert und es sind Fanglager vorgesehen, die beim Abwurf oder im Stillstand des Rotors 2 die Lagerung des Rotors 2 übernehmen. Im stromlosen Zustand befindet sich der Rotor 2 in seiner unteren Endlage A. In dieser unteren Endlage A kann der Rotor 2 in Kontakt mit dem Einlaufbelag 5 kommen, wobei das Lager so ausgerichtet ist, dass nur ein leichtes Anstreifen am Einlaufbelag 5 vorgesehen ist, so dass der Einlaufbelag 5 durch das Ablegen des Rotors 2 nicht zerstört wird. Beim Betrieb wird der Rotor 2 durch die Aktivmagnetlager in eine obere Endlage B angehoben.
Die Anstreifdichtung 1 ist derart ausgebildet und angeordnet, dass sie eine maximale Verschiebung des Rotors 2 in axialer Richtung aus der unteren Endlage A in die obere Endlage B ermöglicht, ohne dass es zu einem zu starken Anstreifen des Rotors 2 an der Anstreifdichtung 1 kommt, welches eine Zerstörung der Anstreifdichtung 1 zur Folge hätte. Hierzu ist die Anstreifdichtung 1 derart angeordnet, dass ihre Längsachse L im Wesentlichen vertikal ausgerichtet ist, da es beim Anheben und beim Abwerfen des Rotors 2 im Störfall zu einer im Wesentlichen vertikalen Auslenkung des Rotors 2 kommt. Durch die ovale Ausbildung der Anstreifdichtung 1 lässt sich dabei gleichzeitig ein enger Radialspalt in Querrichtung erzielen, was insgesamt zu einem optimierten Dichtspalt und damit zu einem erhöhten Wirkungsgrad führt.

Aus Montagegründen ist es dabei sinnvoll, dass zunächst eine vertikale Dichtschale (3.1)) horizontal in das Gehäuse 4 eingelegt wird, dann der Rotor 2 in der Dichtschale 3.1 abgelegt wird, die zweite Dichtschale 3.2 aufgelegt wird und anschließend die vertikalen Dichtschalen 3.1; 3.2 um 90 Grad gedreht werden.

Die erfindungsgemäße Dichtungsanordnung eignen sich nicht nur wie im Ausführungsbeispiel beschrieben zur Abdichtung des Dichtspaltes zwischen einem Rotor und einem Gehäuse, sondern auch zum Abdichten eines Spaltes zwischen den Spitzen von Turbinenschaufeln und dem Gehäuse. Die erfindungsgemäße Dichtungsanordnung sind überall da einsetzbar, wo es zu einer stärkeren Verschiebung des Rotors in eine Hauptrichtung kommt, wohingegen die Verschiebung in die übrigen Richtungen klein ist. Durch die ovale Ausbildung der Anstreifdichtung kann in diesem Fall der Radialspalt zwischen dem rotierenden Bauteil und dem Gehäuse minimiert und damit der Wirkungsgrad optimiert werden.

## Patentansprüche

1. Dichtungsanordnung, umfassend wenigstens eine Anstreifdichtung (1) zur Abdichtung eines Spaltes zwischen einem Rotor (2) und einem Gehäuse (4), wobei die Anstreifdichtung (1) eine Dichtschale (3) mit einer ovale Öffnung zur Aufnahme des Rotors (2) aufweist und wobei der Rotor (2) von aktiv Magnetlagern gelagert wird und Fanglager vorgesehen sind, die im Störfall oder im Stillstand des Rotors (2), die Lagerung des Rotors (2) übernehmen,
**dadurch gekennzeichnet, dass**
die Anstreifdichtung (1) derart angeordnet ist, dass Ihre Längsachse (L) im Wesentlichen vertikal ausgerichtet ist, wobei die Längsachse im wesentlichen mit der Richtung der Hauptachse der Rotorauslenkung übereinstimmt.

2. Dichtungsanoprdnung nach Anspruch 1,
**dadurch gekennzeichnet, dass**
die Dichtschale (3) geteilt ausgebildet ist.

3. Dichtungsanordnungnach Anspruch 1 oder 2,
**dadurch gekennzeichnet, dass**
die Anstreifdichtung (1) als Labyrinth-Anstreifdichtung ausgebildet ist.

## Claims

1. Sealing arrangement, comprising at least one abradable seal (1) for sealing off a gap between a rotor (2) and a housing (4), wherein the abradable seal (1) has a sealing shell (3) with an oval opening for receiving the rotor (2) and wherein the rotor (2) is supported by active magnetic bearings, and provision is made of touchdown bearings, which perform the mounting of the rotor (2) in the event of failure or during downtime of the rotor (2),
**characterized in that**
the abradable seal (1) is arranged in such a manner that the longitudinal axis (L) thereof is oriented in a substantially vertical manner, wherein the longitudinal axis corresponds substantially to the direction of the main axis of the rotor deflection.

2. Sealing arrangement according to Claim 1,
**characterized in that**
the sealing shell (3) has a split form.

3. Sealing arrangement according to Claim 1 or 2,
**characterized in that**
the abradable seal (1) is in the form of a labyrinth abradable seal.

## Revendications

1. Dispositif d'étanchéité, comprenant une garniture d'étanchéité abradable (1) destinée à assurer l'étanchéité d'un espace entre un rotor (2) et un carter (4), dans lequel la garniture d'étanchéité abradable (1) présente une coque d'étanchéité (3) avec une ouverture ovale destinée à loger le rotor (2) et dans lequel le rotor (2) est monté par des paliers magnétiques actifs et des paliers de sécurité sont prévus, lesquels en cas de panne ou d'arrêt du rotor (2), adoptent la position du rotor (2), **caractérisé en ce que** la garniture d'étanchéité abradable (1) est disposée de telle sorte que son axe longitudinal (L) est orienté pour l'essentiel à la verticale, dans lequel l'axe longitudinal coïncide pour l'essentiel avec la direction de l'axe principal de la déviation du rotor.

2. Dispositif d'étanchéité selon la revendication 1,
**caractérisé en ce que**
la coque d'étanchéité (3) est réalisée divisée.

3. Dispositif d'étanchéité selon la revendication 1 ou 2,
**caractérisé en ce que**
la garniture d'étanchéité abradable (1) est réalisée en tant que garniture d'étanchéité abradable labyrinthe.
